# DEMANDE DE BREVET EUROPEEN

(11) **EP 2 567 864 A1**
(43) Date de publication de la demande: **13.03.2013**
(21) Numéro de dépôt: 12184109.2
(22) Date de dépôt: 12.09.2012
(51) Int. Cl.: B60N 2/48

(54) **Appui-tête de siège de véhicule automobile**

(30) Priorité: 12.09.2011 FR 1158075
(71) Demandeur: CENTRE D'ETUDE ET DE RECHERCHE POUR L'AUTOMOBILE (CERA), 51100 Reims (FR)
(72) Inventeur: Bonfils, Xavier, 51100 Reims (FR)
(74) Mandataire: Sayettat, Julien Christian

(57) **Abrégé**

L'invention concerne un appui-tête de siège de véhicule automobile, ledit appui-tête comprenant une armature (1), ladite armature comprenant une base (2) et une partie mobile (3) solidaire d'un coussin d'appui, ladite partie mobile étant reliée à ladite base par une bielle arrière (4) et une bielle avant (5) montées selon un premier (6) et un deuxième (7) axe transversaux disposés respectivement en bas et en haut de ladite bielle arrière et un troisième (8) et un quatrième (9) axe transversaux disposés respectivement en bas et en haut de ladite bielle avant, de manière à permettre une translation longitudinale de ladite partie mobile, une desdites bielles comprenant une zone crantée (10), ladite armature étant pourvue d'un verrou (11) agencé pour coopérer avec les crans (12) de ladite zone de manière à définir une pluralité de positions de réglage longitudinal de ladite partie mobile, lesdites positions s'étendant entre deux positions extrêmes de réglage arrière et avant.

## Description

II est connu, de réaliser un appui-tête de siège de véhicule automobile, ledit appui-tête comprenant une armature, ladite armature comprenant une base et une partie mobile solidaire d'un coussin d'appui, ladite partie mobile étant montée à ladite base de manière à pouvoir effectuer une translation longitudinale permettant de définir une pluralité de positions de réglage longitudinal de ladite partie mobile, ceci afin d'optimiser le confort et la sécurité de l'utilisateur.

Les agencements connus d'armatures sont généralement encombrants, ce qui oblige à définir des appuis tête de volume important et limite les possibilités de style dans leur conception.

L'invention a pour but de pallier cet inconvénient en proposant un appui-tête réglable longitudinalement dont l'armature présente une très grande compacité.

A cet effet, l'invention propose un appui-tête de siège de véhicule automobile, ledit appui-tête comprenant une armature, ladite armature comprenant une base et une partie mobile solidaire d'un coussin d'appui, ladite partie mobile étant reliée à ladite base par une bielle arrière et une bielle avant montées selon un premier et un deuxième axe transversaux disposés respectivement en bas et en haut de ladite bielle arrière et un troisième et un quatrième axe transversaux disposés respectivement en bas et en haut de ladite bielle avant, de manière à permettre une translation longitudinale de ladite partie mobile, une desdites bielles comprenant une zone crantée, ladite armature étant pourvue d'un verrou agencé pour coopérer avec les crans de ladite zone de manière à définir une pluralité de positions de réglage longitudinal de ladite partie mobile, lesdites positions s'étendant entre deux positions extrêmes de réglage arrière et avant.

La base est destinée à être solidaire du dossier du siège, par exemple par l'intermédiaire de tiges sur lesquelles coulisse l'armature pour permettre un réglage en hauteur de l'appui-tête.

Par translation longitudinale, on entend un déplacement vers l'avant ou vers l'arrière, ce déplacement s'accompagnant en particulier d'un léger déplacement vertical lié à la présence des bielles.

Les deux positions extrêmes de réglage arrière et avant correspondant à deux crans extrêmes de la zone crantée.

Dans cette description, les termes de positionnement dans l'espace (haut, bas, dessus, dessous, longitudinal, transversal, latéral, avant, arrière, ...) sont pris en référence à l'appui-tête disposé dans le véhicule en position d'utilisation.

Avec l'agencement proposé, le réglage longitudinal de l'appui-tête se fait par traction effectuée par l'utilisateur, notamment sur son coussin.

Par ailleurs, selon une réalisation décrite plus loin, on utilise seulement quatre axes transversaux pour réaliser l'ensemble des fonctionnalités attendues, ce qui limite d'autant les dispersions dimensionnelles.

Le fait d'intégrer la zone crantée à une bielle présente l'avantage de limiter le nombre de composants utilisés.

Enfin, l'agencement proposé présente une très grande compacité par rapport aux agencements connus de l'art antérieur.

D'autres particularités et avantages de l'invention apparaîtront dans la description qui suit, faite en référence aux figures jointes dans lesquelles :
- La figure 1 est une vue en perspective éclatée d'une armature d'appui-tête selon une réalisation,
- Les figures 2 sont des vues schématiques latérales de la réalisation de la figure 1 selon différentes positions de la partie mobile : extrême arrière de réglage (2a), intermédiaire entre les positions extrêmes de réglage avec le verrou activé (2b), extrême avant de réglage (2c), de déverrouillage (2d) et intermédiaire entre les positions extrêmes de réglage avec le verrou inactivé (2e).

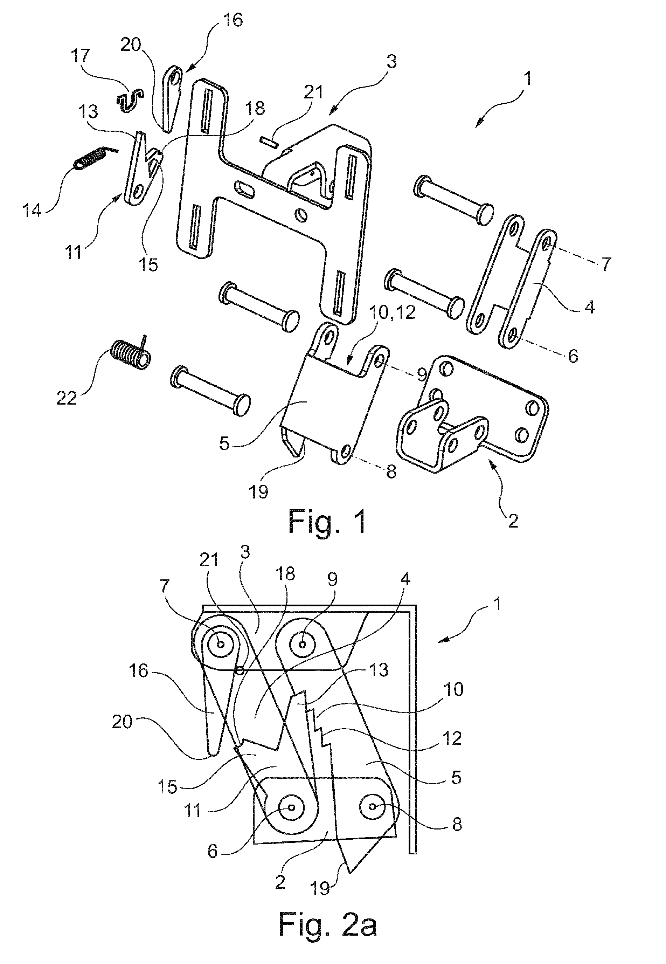

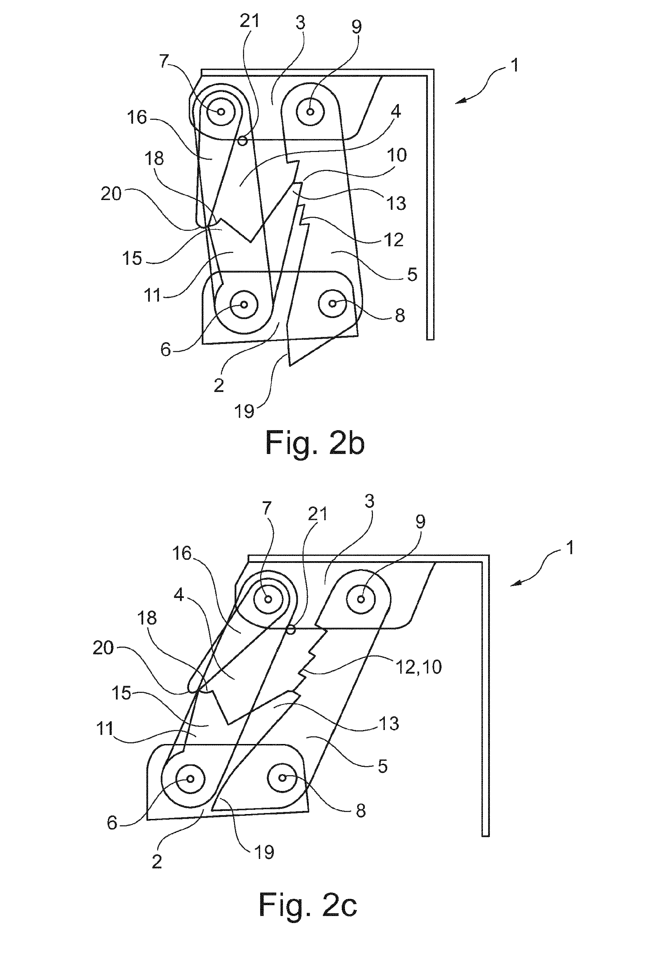

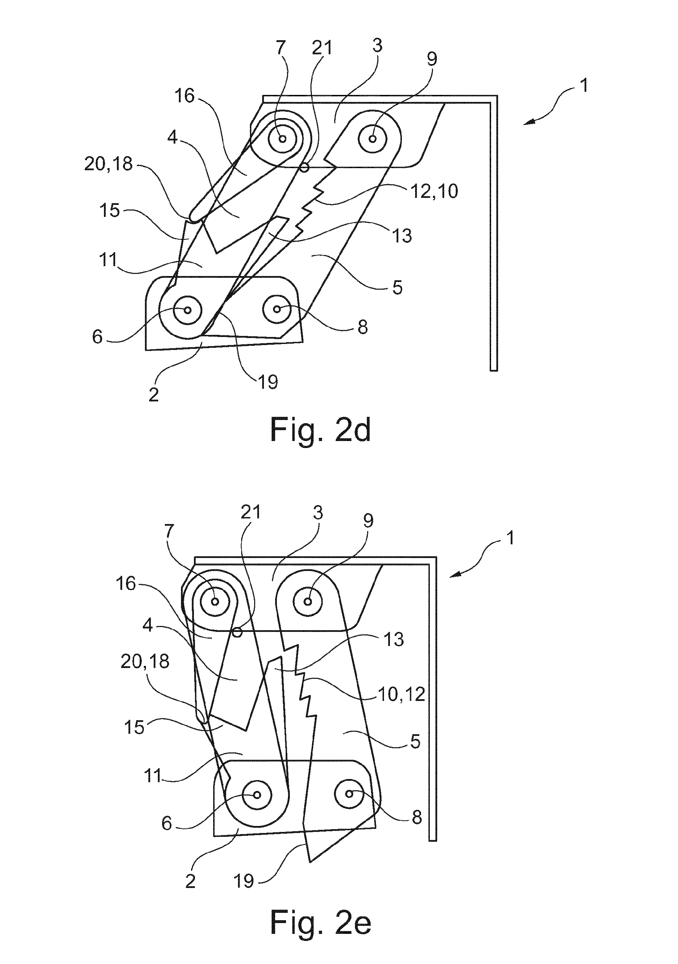

En référence aux figures, on décrit un appui-tête de siège de véhicule automobile, ledit appui-tête comprenant une armature 1, ladite armature comprenant une base 2 et une partie mobile 3 solidaire d'un coussin d'appui, non représenté, ladite partie mobile étant reliée à ladite base par une bielle arrière 4 et une bielle avant 5 montées selon un premier 6 et un deuxième 7 axe transversaux disposés respectivement en bas et en haut de ladite bielle arrière et un troisième 8 et un quatrième 9 axe transversaux disposés respectivement en bas et en haut de ladite bielle avant, de manière à permettre une translation longitudinale de ladite partie mobile, une desdites bielles comprenant une zone 10 crantée, ladite armature étant pourvue d'un verrou 11 agencé pour coopérer avec les crans 12 de ladite zone de manière à définir une pluralité de positions de réglage longitudinal de ladite partie mobile, lesdites positions s'étendant entre deux positions extrêmes de réglage arrière (figure 2a) et avant (figure 2c).

Selon la réalisation représentée, les bielles 4,5 sont montées en parallélogramme, ce qui permet de conserver « l'assiette » de la partie mobile 3.

Selon la réalisation représentée, la zone crantée 10 est disposée sur la bielle avant 5, ici en partie arrière de ladite bielle.

Selon la réalisation représentée, le verrou 11 est monté en rotation selon le premier axe 6, ledit verrou comprenant une saillie 13 de crantage avec les crans 12, ledit verrou étant solidaire d'un premier moyen ressort 14 l'actionnant vers la zone crantée 10 de manière à réaliser le crantage.

Selon la réalisation représentée, le verrou 11 comprend en outre une excroissance 15 sur laquelle s'appuie un doigt 16 monté en rotation selon le deuxième axe 7, ledit doigt étant actionné vers ladite excroissance par un deuxième moyen ressort 17, ladite excroissance étant pourvue d'une encoche 18, la bielle avant 5 étant pourvue d'une zone d'appui 19 agencée pour repousser ledit verrou vers l'arrière lorsque la partie mobile 3 est avancée en position de déverrouillage située au delà de la position extrême de réglage avant, de sorte que l'extrémité libre 20 dudit doigt s'introduise dans ladite encoche pour empêcher un retour dudit verrou vers la zone crantée 10, ladite partie mobile étant pourvue d'une butée 21 disposée de manière à venir en appui contre ledit doigt lors du retour de ladite partie mobile vers l'arrière, afin de dégager ladite extrémité libre de ladite encoche et libérer l'actionnement par le premier moyen ressort 14 dudit verrou vers ladite zone crantée.

Selon la réalisation représentée, la bielle avant 5 est solidaire d'un troisième moyen ressort 22 l'actionnant en rotation vers l'arrière autour du troisième axe 8, de manière à garantir le crantage.

De la sorte, l'utilisateur peut, en réalisant une traction de la partie mobile 3 vers l'avant à partir de la position extrême avant de réglage, désactiver le verrou 11.

Lorsque l'utilisateur relâche l'appui-tête, la partie mobile 3 est alors actionnée vers l'arrière sous l'action du troisième moyen ressort 22.

Lorsque la butée 21 vient en appui contre le doigt 16, l'extrémité libre 20 se dégage de l'encoche 18 et le verrou 11 peut à nouveau jouer son rôle.

On se retrouve ainsi dans la situation de crantage correspondant à la figure 2a et l'utilisateur peut à nouveau régler la position longitudinale de l'appui-tête. Comme on peut l'observer en figure 1, les bielles 4,5 sont sous forme de plaques métalliques repliées en U, la zone crantée 10 étant disposée sur une des branches de U de la bielle avant 5.

Bien entendu, la réalisation décrite ici n'est pas limitative, un certain nombre de variantes pouvant être réalisées :
- partie mobile disposée en dessous de la base et zone crantée disposée sur la bielle arrière,
- partie mobile disposée au dessus de la base et zone crantée disposée sur la bielle arrière,
- partie mobile disposée en dessous de la base et zone crantée disposée sur la bielle avant,

## Revendications

1. Appui-tête de siège de véhicule automobile, ledit appui-tête comprenant une armature (1), ladite armature comprenant une base (2) et une partie mobile (3) solidaire d'un coussin d'appui, ladite partie mobile étant reliée à ladite base par une bielle arrière (4) et une bielle avant (5) montées selon un premier (6) et un deuxième (7) axe transversaux disposés respectivement en bas et en haut de ladite bielle arrière et un troisième (8) et un quatrième (9) axe transversaux disposés respectivement en bas et en haut de ladite bielle avant, de manière à permettre une translation longitudinale de ladite partie mobile, une desdites bielles comprenant une zone crantée (10), ladite armature étant pourvue d'un verrou (11) agencé pour coopérer avec les crans (12) de ladite zone de manière à définir une pluralité de positions de réglage longitudinal de ladite partie mobile, lesdites positions s'étendant entre deux positions extrêmes de réglage arrière et avant.

2. Appui-tête selon la revendication 1, **caractérisé en ce que** les bielles (4,5) sont montées en parallélogramme.

3. Appui-tête selon la revendication 1 ou 2, **caractérisé en ce que** la zone crantée (10) est disposée sur la bielle avant (5).

4. Appui-tête selon la revendication 3, **caractérisé en ce que** le verrou (11) est monté en rotation selon le premier axe (6), ledit verrou comprenant une saillie (13) de crantage avec les crans (12), ledit verrou étant solidaire d'un premier moyen ressort (14) l'actionnant vers la zone crantée (10) de manière à réaliser le crantage.

5. Appui-tête selon l'une quelconque des revendications 3 ou 4, **caractérisé en ce que** le verrou (11) comprend en outre une excroissance (15) sur laquelle s'appuie un doigt (16) monté en rotation selon le deuxième axe (7), ledit doigt étant actionné vers ladite excroissance par un deuxième moyen ressort (17), ladite excroissance étant pourvue d'une encoche (18), la bielle avant (5) étant pourvue d'une zone d'appui (19) agencée pour repousser ledit verrou vers l'arrière lorsque la partie mobile (3) est avancée en position de déverrouillage située au delà de la position extrême de réglage avant, de sorte que l'extrémité libre (20) dudit doigt s'introduise dans ladite encoche pour empêcher un retour dudit verrou vers la zone crantée (10), ladite partie mobile étant pourvue d'une butée (21) disposée de manière à venir en appui contre ledit doigt lors du retour de ladite partie mobile vers l'arrière, afin de dégager ladite extrémité libre de ladite encoche et libérer l'actionnement par le premier moyen ressort (14) dudit verrou vers ladite zone crantée.

6. Appui-tête selon l'une quelconque des revendications 3 à 5, **caractérisé en ce que** la bielle avant (5) est solidaire d'un troisième moyen ressort (22) l'actionnant en rotation vers l'arrière autour du troisième axe (8), de manière à garantir le crantage.

7. Appui-tête selon l'une quelconque des revendications 3 à 6, **caractérisé en ce que** les bielles (4,5) sont sous forme de plaques métalliques repliées en U, la zone crantée (10) étant disposée sur une des branches de U de la bielle avant (5).
